# EUROPEAN PATENT APPLICATION

(11) **EP 4 439 905 A1**
(43) Date of publication of application: **02.10.2024**
(21) Application number: 23165724.8
(22) Date of filing: 30.03.2023
(51) Int. Cl.: H02J 3/18, H02J 3/24, H02J 3/32, H02J 3/40, H02M 1/00

(54) **METHOD FOR CONTROLLING SYNCHRONIZATION OF A CONVERTER COMPRISING A DC LINK TO A GRID**

(71) Applicant: Hitachi Energy Ltd, 8050 Zürich (CH)
(72) Inventor: Hasler, Jean-Philippe, 72244 Västerås (SE); Heydari, Rasool, 72212 Västerås (SE); Zhang, Hongyang, 11524 Stockholm (SE); Danielsson, Christer, 72591 Västerås (SE)
(74) Representative: AWA Sweden AB

(57) **Abstract**

There is disclosed herein a method (100) of determining a phase angle reference (*θ*) for synchronizing a grid-connected voltage-source converter, VSC, (5) with a power grid (4). The VSC comprising an energy storage (3). The method (100) comprising estimating (110) an angular deviation (*dω*) of a VSC reference from a fundamental grid frequency, based on an amount of energy (E) stored in the energy storage (3) and determining (120) the phase angle reference (*θ*) based on the angular deviation (*dω*). There is further disclosed a control unit (10) for performing the method and a grid-connected VSC comprising the control unit.

## Description

### Technical Field

The present disclosure relates to a power grid system comprising a voltage source converter enacting a grid forming control. More particularly, the present disclosure relates to a method for generating a phase reference for synchronizing a voltage source converter with a power grid.

### Background

Voltage source converters, VSCs, enacting a grid forming control are being increasingly implemented into power grids, accompanying and enabling an increasing penetration of renewable energy sources in modern power systems. To ensure stable and reliable operation of a power grid, the power of VSCs should be intelligently controlled and synchronized. Synchronization of a VSC is the process of aligning the phase and frequency of the VSC output voltage with that of the grid voltage. This is important because, without synchronization, the VSC may inject or absorb power at a phase angle that is misaligned with the grid voltage, which could cause instability in the power grid and/or damage to the VSC.

Grid following control and grid forming control are two different control strategies that are used to regulate the voltage and frequency of VSCs in power systems. Grid following control is a control strategy in which the VSCs are designed to measure and follow the voltage and frequency of the grid, while grid forming control is a control strategy in which the VSCs are designed to generate a voltage and frequency that is in line with the grid voltage and frequency. Viewed from one perspective, a VSC enacting grid forming control can be seen as acting as a virtual synchronous machine, thereby providing inertia to the power grid, and is thus advantageously implemented in weaker power grids.

### Summary

It is realized as a part of the present disclosure that, for static synchronous compensators, STATCOMs, and similar such converters having smaller energy storages, when acting as VSCs, existing control methods do not provide good enough control of the DC voltage and there may be power quality issues originating from the existing control methods. Hence, there is a desire to improve the methods of controlling a VSC in a power grid according to a grid forming control.

It is an object of the present disclosure to mitigate, alleviate or eliminate one or more of the above-identified deficiencies in the art and disadvantages. This object is at least partly met by the present disclosure, the full scope of which is defined in the independent claims. Preferred embodiments of the present disclosure are set out in the dependent claims.

Thus, according to the presently described approach, an improved method of determining a phase angle reference based on the energy of the energy storage is provided.

More specifically, according to a first aspect of the present disclosure, there is provided a method of determining a phase angle reference for synchronizing a grid-connected voltage-source converter, VSC, with a power grid, the VSC comprising an energy storage. The method comprises estimating an angular deviation of a VSC reference from a fundamental grid frequency, based on an amount of energy stored in the energy storage, and determining the phase angle reference based on the angular deviation.

According to such an approach, the angular deviation is based on the amount of energy stored in the energy storage instead of, according to example prior art approaches, a measurement taken as part of a phase-locked loop. Prior art systems typically comprise separate control loops/processes for controlling an amount of charge in the energy storage of the VSC, and for synchronizing the output of the VSC with a power grid. However, it is realized as part of the present disclosure that implementing separate control loops in this way, especially when the size of the energy storage of the VSC is relatively small (i.e., compared to a typical charge/discharge amount), these controls will often interfere with each other, and/or with other control systems in VSCs elsewhere on the power grid. Such interference may thus lead to poor controllability, poor stability, resonance, and/or an ill-defined inertia contribution of the VSC, among other undesirable outcomes.

Therefore, according to the presently described approach, the phase angle reference may be controlled as part a control process that integrates the control of the synchronization with the control of the DC voltage (i.e., the energy stored in the energy storage). As a consequence of such an improved approach, the operation of the VSC, especially when operating in weak power grids, may be made more stable and reliable, thereby improving the stability of the power grid on which the VSC is installed.

Furthermore, by using the energy of the energy storage for determining the phase angle reference, a grid forming control for the VSC is achieved in a way that eliminates the need for a phase-locked loop. Hence, the control system as a whole is greatly simplified, for example removing any requirement of phase measurement devices.

A phase difference between a VSC (i.e., the output signal thereof, controlled towards a reference signal, effected by the switching of internal switches such as IGBTs) and a power grid leads to a flow of active power therebetween, according to well understood principles. Thus, active power flow between a VSC and the power grid on which it is installed can be controlled through the phase reference.

It will thus be understood that a power flow from the VSC to the power grid depletes the energy storage of the VSC (e.g., a capacitor or supercapacitor). Accordingly, the presently disclosed approach exploits the realization that a depleted energy storage is correlated with a phase difference between the VSC and the power grid. Indeed, through well understood mathematical relations, a changing DC voltage of the energy storage (the square of which is proportional to stored energy) can be mapped to a corresponding angular deviation between the VSC and the power grid. Viewed from one perspective, such an approach to determining this angular deviation may be considered as being a measurement, albeit indirect, while from another perspective, this approach may be considered as being an estimation of the angular deviation. However, it will be appreciated that this consideration is less relevant to the proper functioning of the presently described control system.

The angular deviation of the VSC from the grid frequency may then be used for determining the phase angle reference, with which an output of the VSC may be controlled. The phase angle difference may be determined by taking the integral of the angular deviation. Thus, the phase angle reference may be advanced or retarded according to a desired power flow into or out from the VSC, and thus can simultaneously provide control of synchronization of the VSC with the power grid, as well as a control of power flow to and from the energy storage to thereby control the amount of energy stored therein.

As mentioned above, as this control system employs a single control loop for both of these processes, there is no risk of interference between the control of synchronization and the control of the energy storage. Moreover, damping can be more easily applied to such a control loop, thereby reducing the risk of instability and/or resonance, e.g., as a result of interactions with other VSCs installed on the same power grid.

In the control of the VSC the phase angle reference may be only one part a voltage reference, that is combined by different references and can be used to control the VSC. The voltage reference may comprise both the phase angle reference, primarily controlling the active power, and a voltage magnitude, primarily controlling the reactive power. The VSC may be controlled directly using the voltage reference, or the voltage reference may be converted to a current reference for controlling the VSC, depending on the particular implementation.

In order to receive an actual value of the amount of stored energy for estimating the angular deviation, the method may further comprise determining the amount of energy stored in the energy storage based on a direct current, DC, voltage of the energy storage.

That is, the energy stored in the energy storage can be calculated based on the DC voltage across the energy storage, as understood by those skilled in the art. The DC voltage may already be measured as part of converter control and monitoring systems. Thus, by using the DC voltage of the energy storage to determine the energy stored in the energy storage, no further complicated measurements are required to be obtained. Furthermore, the change of DC voltage of the energy storage is easy to monitor and a further precise value of the energy in the energy storage may be provided using filtering, averaging, etc., in manners understood by those skilled in the art.

The amount of energy stored in the energy storage may (further) be based on a power flow of the VSC. That is, the estimate for the amount of energy stored in the energy storage can be advantageously refined through a comparison with a calculated power flow through the VSC, i.e., a multiple of the voltage and the current at the coupling point of the VSC. Accordingly, estimation errors may be corrected, and the energy estimation may be prevented from drifting over time.

The amount of energy stored in the energy storage may be controlled towards a set energy value and the angular deviation may then be determined based on an energy deviation of the amount of energy storage in the energy storage from said set energy value. The set energy value may be a state of full charge, half-charge, or some percentage charge of the energy storage, depending on the implementation.

It may be advantageous to control the amount of energy stored in the energy storage towards the set energy value to ensure a ready supply of energy in the energy storage and thereby ensure that the VSC can inject power into the power grid if needed, which may further increase the stability of the power grid. The difference between the amount of energy stored and the set energy value can thus be used to determine the angular deviation as the power flow from the VSC (i.e., depleting the energy storage from the set energy value) can be readily determined, and the angular deviation can be determined from said determined power flow as discussed above.

The method may further comprise applying a damping control to said controlling the amount of energy stored in the energy storage.

When a disturbance occurs in a power grid, such as a sudden change in load or a fault, the voltage and current levels in the power grid may change rapidly. These changes may cause oscillations in the power grid. By applying the damping control to the control of the amount of energy stored in the energy storage the VSC may be able to counteract oscillations in the power grid by adjusting the phase angle reference and the voltage magnitude. Furthermore, the VSC may be used to stabilize the power grid after a disturbance.

The method may further comprise determining the damping control based on the amount of energy stored in the energy storage.

The damping control may also be determined from the amount of energy stored in the energy storage, which result in that the energy of the energy storage may be used to determine both the phase angle reference and the damping. Thereby, providing both the phase angle and the voltage magnitude for the voltage reference.

The VSC may be a static synchronous compensator, STATCOM.

It may be advantageous to use a STATCOM as they provide a rapid response time with a high efficiency. Furthermore, STATCOMs can also provide harmonic mitigation in power grids, as they can inject or absorb harmonic currents as needed to maintain power quality.

According to a second aspect of the present disclosure there is provided a control unit for a VSC configured to perform the method according the first aspect.

According to a third aspect of the present disclosure there is provided a grid-connected voltage-source converter, comprising the control unit according to the second aspect.

Effects and features of the second aspect and the third aspect may be largely analogous to those described above in connection with the first aspect. Embodiments mentioned in relation to the first aspect may be at least largely compatible with the second aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular component parts of the device described or steps of the methods described as such device and method may vary. It is also to be understood that the terminology used herein is for purpose of describing particular embodiments only, and is not intended to be limiting.

### Brief Description of the Drawings

The present disclosure will by way of example be described in more detail with reference to the appended drawings, which show example embodiments of the disclosure.
- Fig. 1: illustrates an overview of a grid-connected voltage source converter with an energy storage and a control unit.
- Fig. 2: illustrates the same grid-connected voltage source converter with an energy storage as figure 1, with the control unit being exploded to show the control scheme.
- Fig. 3: illustrates a method of determining a phase angle reference for synchronizing a grid-connected voltage-source converter, VSC, with a power grid.

### Detailed Description

The present disclosure will now be described more fully hereinafter with reference to the accompanying drawings, in which currently preferred embodiments of the disclosure are shown. This disclosure may, however, be embodied in many different forms and should not be construed as limited to the embodiments set forth herein; rather, these embodiments are provided for thoroughness and completeness, and fully convey the scope of the disclosure to the skilled person.

It is realized by the inventors that for voltage source converters, VSCs, such as static synchronous compensators, STATCOMs, and similar converters having smaller energy storages, the existing control methods do not provide good enough control of the VSC which may cause power quality issues. Accordingly, there is provided a grid forming control method using the energy of the energy storage connected to the VSC for generating a phase reference for the VSC, which will be further described below.

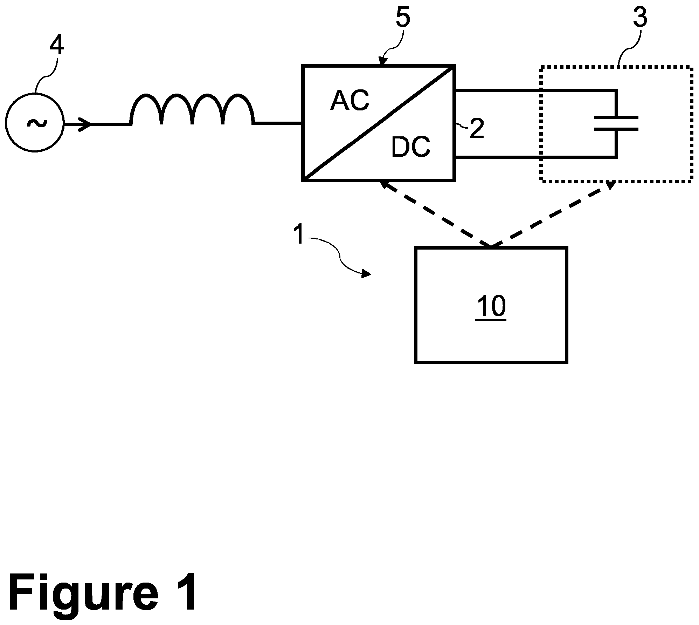

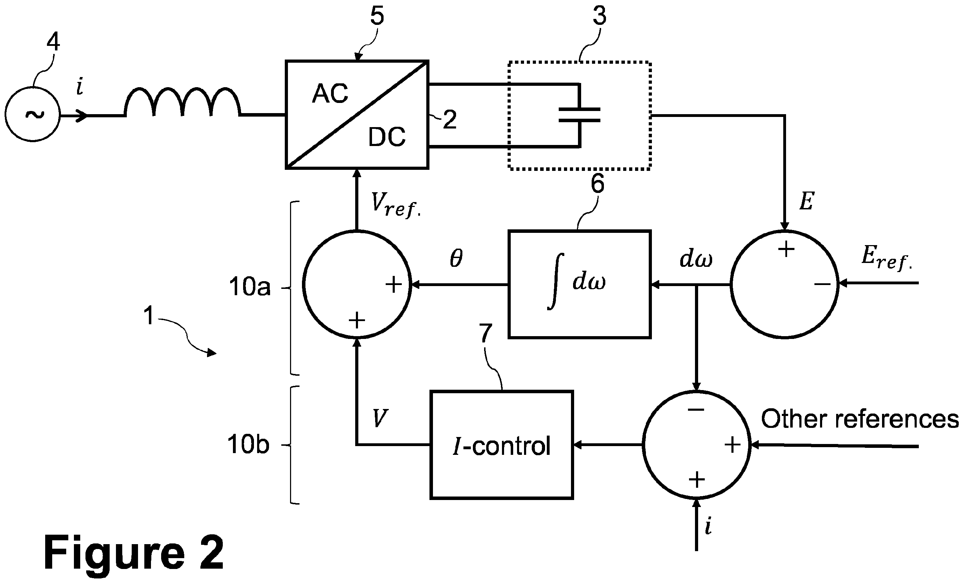

Turning to Fig. 1 and 2, a grid-connected VSC 5 is illustrated. The VSC 5 is connected between an alternative current (AC) power grid 4 at a transmission side and a direct current, DC, side 2. The DC side 2 comprises an energy storage 3 comprising a capacitor. In alternative examples, the energy storage 3 may be a battery, a (super-)capacitor, or other types of energy storages.

A control unit 10 is further provided, being communicatively coupled to the VSC 5 and the energy storage 3 via wired or wireless means. The control unit 10 is configured to monitor and control the operations of the VSC 5 so as to, inter alia, generate a voltage reference for the VSC 5 with which the VSC 5 may control the switching of power electronic switches therein, to thereby affect the output signal of the VSC 5, e.g., such that it is synchronized with the power grid 4.

Although the energy storage 3 is illustrated as being separate and distinct from the VSC 5, it will be appreciated that the energy storage 3 may be, or may at least be consider as being, integral to the VSC 5.

A control structure 1 for synchronizing the VSC 5 with the power grid 4 is provided and Fig. 1 illustrates an embodiment of the control system of the control unit 10 with a number of steps for controlling the VSC 5.

A VSC 5 such as that shown in Fig. 1 may be controlled according to a control signal referred to as a voltage reference *V_{ref.}.* In other examples, the control signal may be a current reference. The VSC 5 may comprise a plurality of power electronic switches, and the voltage reference *V_{ref.}* may be used to control a switching of the power electronic switches, such that the VSC 5 power signal forms a waveform. The waveform of the power signal may have a frequency substantially corresponding to the frequency of the power grid 4 (e.g., 50 Hz or 60 Hz). The magnitude and phase of the power signal may be controlled according to the voltage reference *V_{ref.}* provided to the VSC 5.

That is, the voltage reference *V_{ref.}* may be a phasor having a magnitude and a (relative) phase. The magnitude *V* and phase *θ* components of the voltage reference *V_{ref.}* may be controlled substantially separately or together.

A target of the control unit 10 is to determine a phase angle reference *θ* which can be used for synchronizing the VSC 5 with the power grid 4. Prior art systems comprised separate control loops for such phase angle control, as well as a control to maintain a state of charge (represented as an energy E) of the energy storage 3. However, having separate control loops in this way risks interference therebetween and thus an unstable control and poor power quality. Accordingly, the presently disclosed system 1 relates to an integrated control scheme for control of the energy storage 3 and the phase angle reference *θ*, shown in more detail in Fig. 2.

A phase angle difference between the power grid 4 and the VSC 5 leads to a flow of active power between the power grid 4 and the VSC 5, which in turn affects the amount of energy E stored in the capacitor 3. The amount of energy E stored in the capacitor 3 can thus be compared with an energy reference *E_{ref.}* and thereby an angular deviation *dω* between the VSC 5 and the power grid 4 can be estimated (e.g., through knowledge of the fundamental frequency of the power grid). Similarly, a power flow to/from the VSC 5 can be controlled by a control of the phase angle reference *θ*. Thus, it can be appreciated that, according to the presently disclosed techniques, a synchronization control of the VSC 5 can be integrated with the control of the energy E in the energy storage 3.

From the angular deviation *dω,* a phase angle for the phase angle reference *θ* can be determined, e.g., through integration by an integrator 6. The phase angle reference *θ* is then incorporated into the voltage reference *V_{ref.}* for controlling the VSC 5.

The energy reference *E_{ref.}* may be a predetermined level of stored energy towards which the energy storage 3 is controlled, such as a full state of charge, a half state of charge, or some other amount. A deviation therefrom can thus imply power flow between the VSC 5 and the grid 4 and hence a phase difference therebetween. If the power flow is to be changed, this can be affected through appropriate modification of the phase angle reference *θ*. That is, the phase angle reference *θ* may be advanced or retarded according to a desired power flow into or out from the VSC 5, and thus a simultaneous control of synchronization of the VSC 5, as well as of the amount of energy *E* in the energy storage 3, can be achieved.

A changing DC voltage of the capacitor 3 (the square of which is proportional to stored energy *E*) can be mapped to a corresponding angular deviation *dω* between the VSC 5 and the power grid 4, through well-known mathematical relations.

The energy *E* estimate may be further refined through a monitoring of the power signal from the VSC 5, e.g., at a point of (common) coupling (PCC). That is, a voltage and current from the VSC 5 may be multiplied together to determine a power from the VSC 5, and this determined power may be compared with the estimated energy *E* in the energy storage 3 so as to refine and/or stabilize the estimate for the energy *E.*

By using the amount of energy *E* in the energy storage 3 for determining the phase angle reference *θ*, a grid forming control for the VSC 5 is achieved in a way that eliminates the need for a phase-locked loop which is used in the prior art. Hence, the control system 1 as a whole is greatly simplified, for example removing any requirement of phase measurement devices and consolidating the control loops needed for controlling the amount of energy *E* stored in the energy storage of the VSC 5, and for synchronizing the output of the VSC 5 with a power grid 4. Thereby, the risk that different control loops interfere with each other, and/or with other control systems in VSCs elsewhere on the power grid 4, is mitigated or at least reduced, which is especially importance for weak power grids.

The angular deviation *dω* used for determining the phase angle reference *θ* may be considered as being a measurement, albeit indirect, while from another perspective, this approach may be considered as being an estimation of the angular deviation *dω*. However, it will be appreciated that this consideration is less relevant to the proper functioning of the presently described control system 1.

So as to summarize the control system 1 of Figs. 1 and 2, the angular deviation *dω* of the power signal of the VSC 5 from the power grid 4 is determined based on the amount of energy E stored in the energy storage 3. This determined angular deviation *dω* is then used to determining a phase angle reference *θ*, which is used to control the VSC 5 as part of a voltage reference *V_{ref.}.*

The control scheme 1 shown in figure 2 comprises two paths 10a and 10b. The phase angle reference *θ* control path 10a is that described above. The further path 10b comprises a damping control.

To enable the VSC 5 to counteract oscillations in the power grid 4 the control system 1 may apply a damping control 10b to said controlling amount of energy 11 stored in the capacitor 3. The damping control 10b may comprise a plurality of inputs, including the amount of energy E stored in the capacitor 3, or the angular deviation *dω* derived therefrom. Further inputs include other references and the current i in the VSC 5.

The inputs are fed into a current controller 7 which may implement, for example, a PI or PID control scheme to determine a reference current for the VSC 5, which may be translated to a voltage *V* depending on the implementation of the VSC 5.

The phase angle reference *θ* and a voltage magnitude *V* from the damping control 10b may be combined into a voltage reference *V_{ref.}.* The VSC 5 may be controlled directly using the voltage reference *V_{ref.},* or the voltage reference *V_{ref.}* may be maintained as or converted to a current reference for controlling the VSC 5, depending on the particular implementation.

According to the presently disclosed techniques, the damping control 10b is advantageously more stable as it can be applied to a single consolidated control scheme 1 and thus there is no risk of conflicting or interfering controls.

It should be understood that even further steps in the control system 1 may be implemented to achieve a further refined control of the VSC 5. These steps may be provided using filtering, averaging, etc., in manners understood by those skilled in the art.

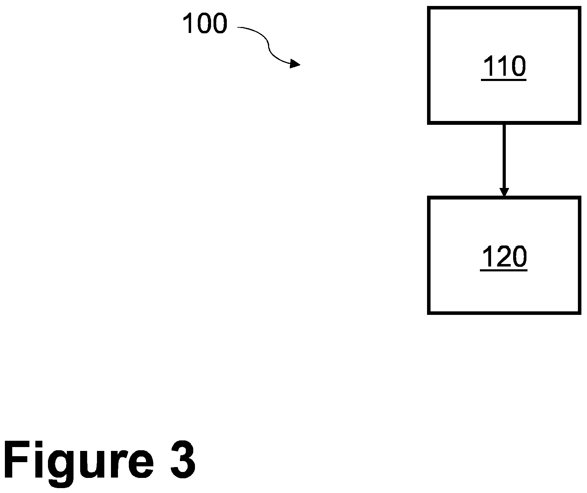

Turning to Fig. 3, a method 100 of determining a phase angle reference for synchronizing a grid-connected VSC with a power grid is illustrated. The method 100 comprises estimating 110 the angular deviation of a VSC reference from a fundamental grid frequency, based on an amount of energy stored in the energy storage, and determining 120 the phase angle reference based on the angular deviation.

The person skilled in the art realizes that the present disclosure by no means is limited to the preferred embodiments described above. On the contrary, many modifications and variations are possible within the scope of the appended claims. Additionally, variations to the disclosed embodiments can be understood and effected by the skilled person in practicing the claimed invention, from a study of the drawings, the disclosure, and the appended claims.

## Claims

1. A method of determining a phase angle reference for synchronizing a grid-connected voltage-source converter, VSC, with a power grid, the VSC comprising an energy storage, the method comprising:
estimating an angular deviation of a VSC reference from a fundamental grid frequency, based on an amount of energy stored in the energy storage; and
determining the phase angle reference based on the angular deviation.

2. The method according to claim 1 further comprising:
controlling an output of the VSC based on the phase angle reference.

3. The method according to claim 1 or claim 2, further comprising:
determining the amount of energy stored in the energy storage based on a direct current, DC, voltage of the energy storage.

4. The method according to claim 3, further comprising:
determining the amount of energy stored in the energy storage further based on a power flow of the VSC.

5. The method according to any preceding claim, further comprising:
controlling the amount of energy stored in the energy storage towards a set energy value; and
determining the angular deviation based on an energy deviation of the amount of energy stored in the energy storage from the set energy value.

6. The method according to any one of claims 2 to 5, further comprising:
applying a damping control to said controlling of the output of the VSC.

7. The method according to claim 6 further comprising:
determining the damping control based on the amount of energy stored in the energy storage.

8. The method according to any preceding claim, wherein the VSC is a static synchronous compensator, STATCOM.

9. A control unit for a VSC configured to perform the method according to any of claims 1 to 8.

10. A grid-connected voltage-source converter, comprising the control unit according to claim 8.
